# EUROPEAN PATENT SPECIFICATION

(11) **EP 2 676 584 B1**
(45) Date of publication and mention of the grant of the patent: **18.11.2015**
(21) Application number: 11858712.0
(22) Date of filing: 29.07.2011
(51) Int. Cl.: A47J 43/046, A47J 43/07, A21B 7/00

(54) **AUTOMATIC BREAD MAKER**
AUTOMATISCHE BROTBACKMASCHINE
MACHINE À PAIN AUTOMATIQUE

(30) Priority: 17.02.2011 JP 2011032167
(43) Date of publication of application: 25.12.2013
(73) Proprietor: Panasonic Corporation, Osaka 571-8501 (JP)
(72) Inventor: UKIDA, Kazuhiro, Osaka 540-6207 (JP); NAKAYAMA, Atsuo, Osaka 540-6207 (JP); MAEDA, Toshikatsu, Osaka 540-6207 (JP); HIRATA, Yumiko, Osaka 540-6207 (JP)
(74) Representative: Eisenführ Speiser
(86) International application number: PCT/JP2011/004344
(87) International publication number: WO 2012/111050

(56) References cited:
- EP-A2- 0 249 993
- JP-A- 9 117 375
- JP-U- H01 145 329
- JP-U- H01 145 329
- US-A- 5 615 605

## Description

### TECHNICAL FIELD

The present invention relates to an automatic bread maker which can automatically pour a submaterial, such as yeast and raisins, into a cooking material during bread making.

### BACKGROUND ART

Conventionally, automatic bread maker of this type having various configurations have been known (for instance, see Patent Document 1: Japanese Patent No. 3928592 and Patent Document 2: Japanese Unexamined Patent Publication No. 2011-010910).

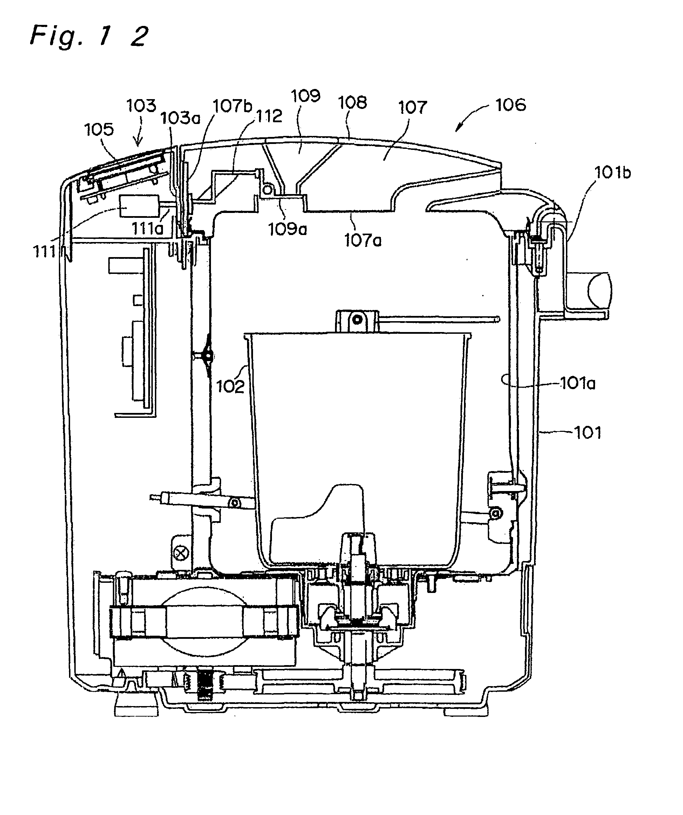

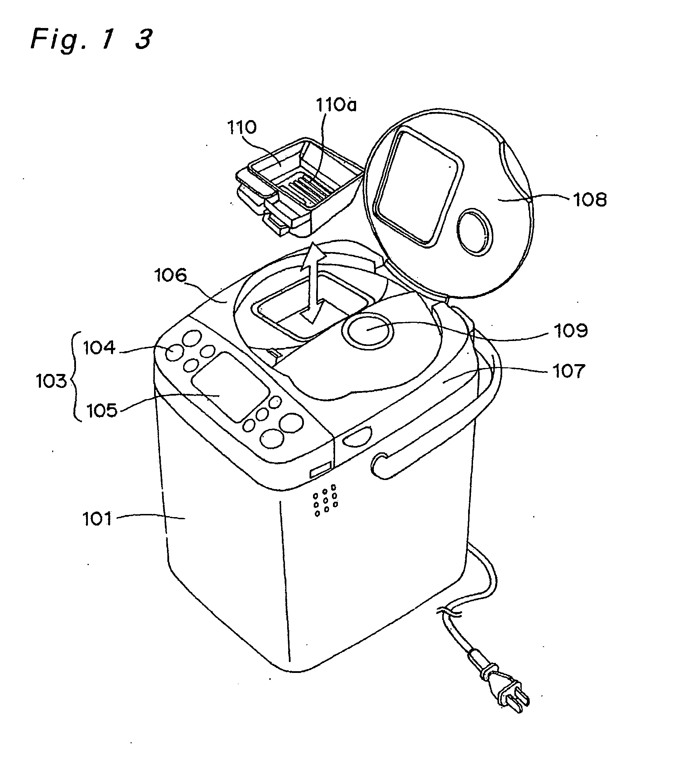

Fig. 12 is a longitudinal cross-sectional view of a conventional automatic bread maker, and Fig. 13 is a perspective view thereof. In Figs. 12 and 13, the conventional automatic bread maker includes a bottomed cylindrical machine body 101. A heating chamber 101a is provided in the machine body 101. A kneading vessel 102, which accommodates therein a cooking material, such as bread dough, is detachably attached into the heating chamber 101 a.

An operating portion 103 including various electronic components is provided in a front upper portion of the machine body 101. The operating portion 103 includes a selecting portion 104, and a displaying portion 105. The selecting portion 104 can select the particular one of a plurality of cooking courses. The displaying portion 105 displays various types of information, such as information selected by the selecting portion 104.

A hinge 101b is provided in a rear upper portion of the machine body 101. A lid 106 capable of opening and closing an upper opening of the heating chamber 101 a is turnably attached to the hinge 101 b. The lid 106 includes a lid body 107, and an outer lid 108. Submaterial vessels 109 and 110 are attached to the lid body 107. The submaterial vessel 109 accommodates therein a submaterial, such as yeast, having a relatively small volume. The submaterial vessel 110 accommodates therein a submaterial, such as raisins and nuts, having a relatively large volume. The submaterial vessels 109 and 110 are arranged above the kneading vessel 102. The outer lid 108 is attached to open and close upper openings of the submaterial vessels 109 and 110.

A bottom wall of the submaterial vessel 109 is configured by an open/close valve 109a. The open/close valve 109a is turnable so that the submaterial accommodated in the submaterial vessel 109 can be poured into the kneading vessel 102. In addition, the open/close valve 109a is urged by a spring (not shown) to close a lower opening of the submaterial vessel 109. A solenoid 111 is arranged below the selecting portion 104 or the displaying portion 105. A plunger 111 a of the solenoid 111 extends through a side wall 103a of the operating portion 103 and a side wall 107b of the lid body 107 to be movable into the lid body 107. When the plunger 111a of the solenoid 111 is moved into the lid body 107, the open/close valve 109a is pressed by a link member 112 bought into contact with the plunger 111a to be turned against a resilient force of the spring. Accordingly, the submaterial in the submaterial vessel 109 is poured into the kneading vessel 102.

A bottom wall of the submaterial vessel 110 is configured by an open/close plate 110a. The open/close plate 110a is turnable so that the submaterial accommodated in the submaterial vessel 110 can be poured into the kneading vessel 102. In addition, the open/close plate 110a is urged by a spring (not shown) to close a lower opening of the submaterial vessel 110. A solenoid (not shown) is arranged below the selecting portion 104 or the displaying portion 105. A plunger (not shown)of the solenoid extends through the side wall 103a of the operating portion 103 and the side wall 107b of the lid body 107 to be moveable into the lid body 107. When the plunger of the solenoid is moved into the lid body 107, the open/close plate 110a is pressed by a link member (not shown) bought into contact with the plunger to be turned against a resilient force of the spring. Accordingly, the submaterial in the submaterial vessel 110 is poured into the kneading vessel 102.

### PRIOR ART DOCUMENTS

Patent Document 1 Japanese Patent No. 3928592
Patent Document 2 Japanese Unexamined Patent Publication No. 2011-010910.

### SUMMARY OF THE INVENTION

### Problems to be solved by the invention

However, in the conventional automatic bread maker, holes through which the plungers of the solenoids extend are required to be provided in the side wall 103a of the operating portion 103. The holes are clogged with debris of flour and nuts, so that the plungers of the solenoids cannot be moved into the lid body 107.

In addition, when the lid 106 is repeatedly opened and closed, a dimension of a clearance between the side wall 103a of the operating portion 103 and the side wall 107b of the lid body 107 is not always constant and is varied. Therefore, for instance, when the clearance is large, the plungers of the solenoids cannot be sufficiently moved into the lid body 107. In this case, the open/close valve 109a and the open/close plate 110a cannot be turned and the submaterials cannot be poured into the kneading vessel 102.

Accordingly, to improve the above issues, an object of the present invention is to provide an automatic bread maker which can prevent holes through which plungers of solenoids extend from being clogged with debris of flour and nuts, and pour a submaterial, such as yeast, into a kneading vessel more reliably.

### Means to Solve the Problems

To achieve the above object, the present invention is configured as follows.

According to a first aspect of the invention, there is provided an automatic bread maker comprising:
a bottomed cylindrical machine body which defines a heating chamber therein;
an operating portion which is provided in a front upper portion of the machine body, the operating portion having an electronic component;
a lid which is turnably attached to a hinge in a rear upper portion of the machine body, the lid opening and closing an upper opening of the heating chamber;
a kneading vessel which is accommodated in the heating chamber and accommodates a cooking material;
a submaterial vessel which is attached to the lid and accommodates a submaterial, the submaterial vessel having at least a portion of a bottom wall where is opened such that the submaterial is poured into the kneading vessel;
a solenoid which is arranged in the hinge, the solenoid having a plunger moved forward and backward along a turning axis of the lid; and
a link member which opens and closes the portion of the submaterial vessel according to the forward and backward moving of the plunger.

According to a second aspect of the invention, there is provided the automatic bread maker according to the first aspect, wherein
a hollow shaft is provided on one of the lid and the hinge, and
a holding portion is provided on the other of the lid and the hinge, the holding portion positioning and holding the plunger to move the plunger forward and backward in the hollow shaft.

According to a third aspect of the invention, there is provided the automatic bread maker according to the first or second aspect, wherein the link member is turned in a surface direction of the lid according to the forward and backward moving of the plunger to open and close the portion of the submaterial vessel.

According to a fourth aspect of the invention, there is provided the automatic bread maker according to third aspect, wherein
the link member and the plunger are bought into contact with each other, and
contacted portions of the link member and the plunger follow a turning operation of the link member.

According to a fifth aspect of the invention, there is provided the automatic bread maker according to the fourth aspect, wherein one of the contacted portion of the link member onto the plunger and the contacted portion of the plunger onto the link member is formed of rubber, and the other is formed of a resin.

According to a sixth aspect of the invention, there is provided the automatic bread maker according to the fourth or fifth aspect, wherein
the contacted portion of the link member passes through the hollow shaft, and
the hollow shaft is formed in an oval shape so as not to inhibit the turning operation of the link member.

According to a seventh aspect of the invention, there is provided the automatic bread maker according to any one of the first to sixth aspects, comprising an insulating cover which supports the solenoid and prevents heat in the heating chamber from being transmitted to the solenoid.

### Effects of the Invention

According to the automatic bread maker of the present invention, the solenoid is provided in the hinge. Therefore, a hole is not required to be provided in a side wall of an operating portion. The clogging of the hole with debris of flour and nuts can thus be eliminated. In addition, a change in dimension is less in the vicinity of the turning axis even when the lid is repeatedly opened and closed. The solenoid can thus release the portion of the submaterial vessel via the link member more reliably. Accordingly, the submaterial, such as yeast, can be poured into the kneading vessel more reliably.

### BRIEF DESCRIPTION OF THE DRAWINGS

These aspects and features of the invention will be apparent from the following description concerning a preferred embodiment with respect to the accompanying drawings, in which:
Fig. 1 is a longitudinal cross-sectional view of an automatic bread maker according to an embodiment of the present invention;
Fig. 2 is a perspective view of the automatic bread maker according to the embodiment of the present invention;
Fig. 3 is a perspective view showing an inner configuration of a lid in the automatic bread maker of Fig. 1, showing a state where an open/close valve and an open/close plate are closed;
Fig. 4 is a perspective view showing an inner configuration of the lid in the automatic bread maker of Fig. 1, showing a state where the open/close valve and the open/close plate are opened;
Fig. 5 is an enlarged perspective view of a hollow shaft;
Fig. 6 is an enlarged perspective view of a hinge;
Fig. 7 is a cross-sectional view of a vicinity of the hinge before a solenoid is driven;
Fig. 8 is a cross-sectional view of the vicinity of the hinge after the solenoid is driven;
Fig. 9 is a perspective view of an insulating cover;
Fig. 10 is a perspective view of the insulating cover seen at an angle different from Fig. 9;
Fig. 11 is an enlarged cross-sectional view of a vicinity of the insulating cover;
Fig. 12 is a longitudinal cross-sectional view of a conventional automatic bread maker; and
Fig. 13 is a perspective view of the conventional automatic bread maker.

### EMBODIMENTS FOR CARRYING OUT THE INVENTION

Before the description of the present invention is continued, the same components in the accompanying drawings are indicated by the same reference numerals.

Hereinafter, an embodiment of the present invention will be described with reference to the drawings.

### «Embodiment»

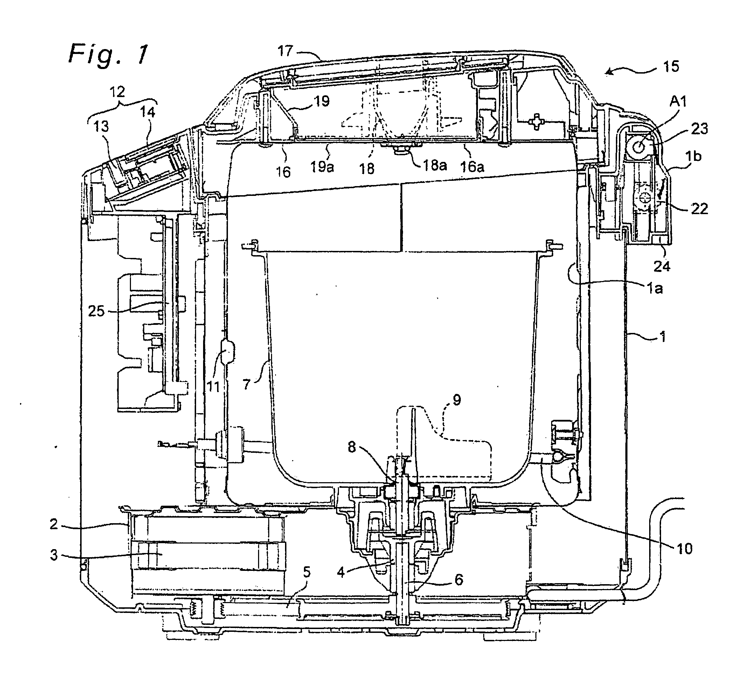

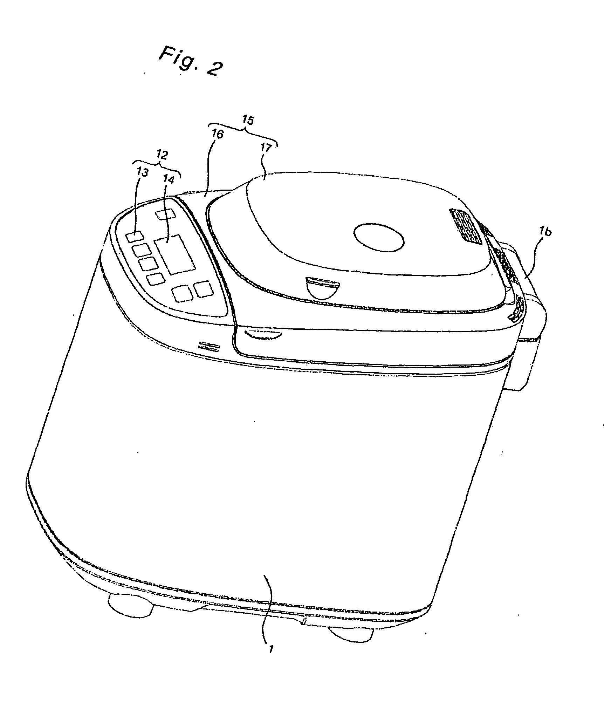

An overall configuration of an automatic bread maker according to an embodiment of the present invention will be described. Fig. 1 is a longitudinal cross-sectional view of the automatic bread maker according to the embodiment of the present invention, and Fig. 2 is a perspective view thereof.

In Figs. 1 and 2, the automatic bread maker according to this embodiment includes a bottomed cylindrical machine body 1. A heating chamber 1a is provided in the machine body 1. A chassis 2 is attached to a lower portion of the machine body 1. A motor 3 is an example of a driving portion. The motor 3 and a vessel support base 4 are attached to the chassis 2.

A lower connector 6 is rotationally supported by the vessel support base 4. The motor 3 applies a rotational force to the lower connector 6 via a transmission mechanism 5 including a pulley and a belt. The lower connector 6 can be engaged with an upper connector 8 which is rotationally supported in a lower portion of a kneading vessel 7.

The kneading vessel 7 is a vessel which accommodates therein a cooking material, such as bread dough, a cake, and a rice cake, and is detachably accommodated in the heating chamber 1a. While the kneading vessel 7 is attached onto the vessel support base 4 by engaging the lower connector 6 and the upper connector 8, the kneading vessel 7 can be detached from the heating chamber 1a by disengaging the upper connector 6 and the upper connector 8.

The upper connector 8 is attached to project upward from a bottom wall of the kneading vessel 7. A kneading blade 9 is detachably attached to an end of the upper connector 8, and kneads the cooking material accommodated in the kneading vessel 7. The rotational force of the motor 3 is transmitted to the transmission mechanism 5 to rotate the lower connector 6 and the upper connector 8, thereby rotationally driving the kneading blade 9.

A heater 10 and a temperature sensor 11 are provided in the heating chamber 1a. The heater 10 is an example of a heating portion which heats the kneading vessel 7. The temperature sensor 11 is an example of a temperature detecting portion which detects a temperature in the heating chamber 1a. The heater 10 is arranged to enclose, with a clearance, the lower portion of the kneading vessel 7 attached onto the vessel support base 4. As the heater 10, for instance, a sheathed heater can be used. The temperature sensor 11 is arranged in a position slightly away from the heater 10 to detect an average temperature in the heating chamber 1a.

An operating portion 12 including various electronic components is provided in a front upper portion (on a left upper side of Fig. 1) of the machine body 1. The operating portion 12 includes a selecting portion 13 and a displaying portion 14. The selecting portion 13 can select a particular one of a plurality of cooking courses. The displaying portion 14 displays various types of information, such as information selected by the selecting portion 13. The selecting portion 13 can start or stop various operations and perform timer setting.

In addition, a hinge 1b is provided in a rear upper portion (on a right upper side of Fig. 1) of the machine body 1. A lid 15 capable of opening and closing an upper opening of the heating chamber 1 a is turnably attached to the hinge 1 b. The lid 15 includes a lid body 16 and an outer lid 17. Submaterial vessels 18 and 19 are attached to the lid body 16. The submaterial vessel 18 accommodates therein a submaterial, such as yeast and spice, having a relatively small volume. The submaterial vessel 19 accommodates therein a submaterial, such as raisins and nuts, having a relatively large volume. The submaterial vessels 18 and 19 are arranged above the kneading vessel 7. The outer lid 17 is attached to open and close upper openings of the submaterial vessels 18 and 19.

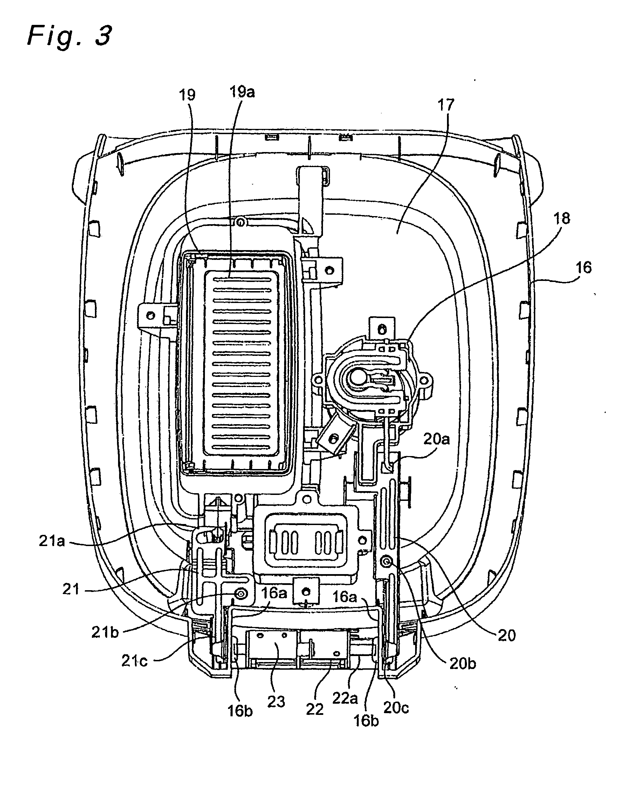

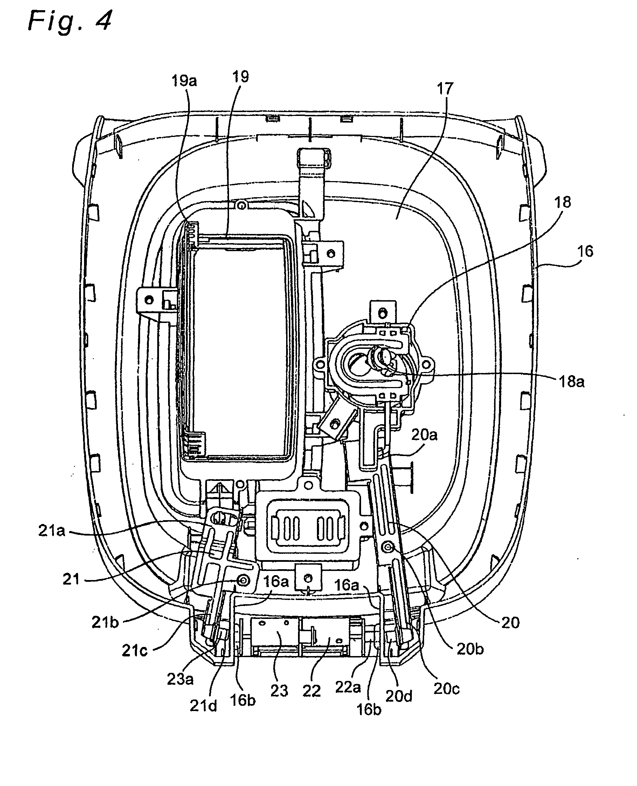

Figs. 3 and 4 are perspective views showing an inner configuration of the lid 15. As shown in Figs. 3 and 4, an open/close valve 18a capable of opening and closing a portion of a bottom wall of the submaterial vessel 18 is provided in the submaterial vessel 18. The open/close valve 18a is turnable so that the submaterial in the submaterial vessel 18 can be poured into the kneading vessel 7. In addition, the open/close valve 18a is urged by a spring (not shown) to close the portion of the submaterial vessel 18.

The open/close valve 18a is engaged with one end 20a of a link member 20. The link member 20 is axially supported by the lid body 17 at an intermediate portion 20b to be turned in a surface direction of the lid 15 (to be parallel to a bottom wall 16a of the lid body 16). As shown in Figs. 3 and 4, the link member 20 is turned to open and close the open/close valve 18a. A projection 20d is provided at the other end 20c of the link member 20.

The submaterial vessel 19 is detachable. A bottom wall of the submaterial vessel 19 is configured by an open/close plate 19a. The open/close plate 19a is turnable so that the submaterial in the submaterial vessel 19 can be poured into the kneading vessel 7. In addition, the open/close plate 19a is urged by a spring (not shown) to close a lower opening of the submaterial vessel 19.

The open/close plate 19a is engaged with one end 21 a of a link member 21. The link member 20 is axially supported by the lid body 17 at an intermediate portion 21 b to be turned in the surface direction of the lid 15 (to be parallel to the bottom wall 16a of the lid body 16). As shown in Figs. 3 and 4, the link member 21 is turned to open and close the open/close plate 19a. A projection 21 d is provided at the other end 21c of the link member 21.

In addition, portions of the lid body 16 in the vicinity of the hinge 1b are formed to sandwich both side walls of the hinge 1b. Hollow shafts 16b and 16b are formed to both wall surfaces 16b of the lid body 16 opposite to both side walls of the hinge 1 b. The link member 20 is turned to pass the projection 20d thereof into the hollow shaft 16b. Likewise, the link member 21 is turned to pass the projection 21d thereof into the hollow shaft 16b.

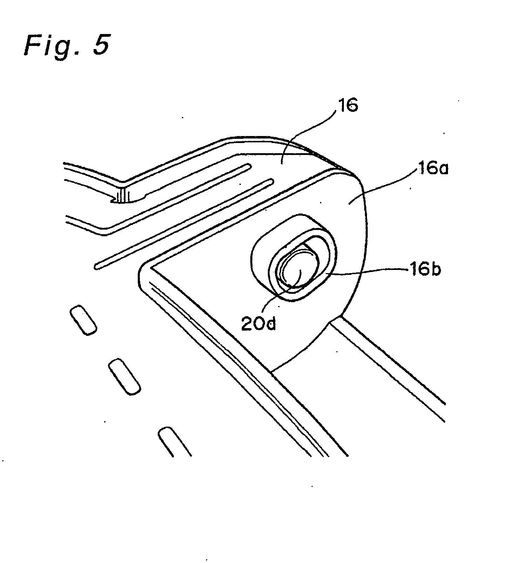

Fig. 5 is an enlarged perspective view of the hollow shaft 16b. The hollow shafts 16b and 16b are formed in an oval shape so as not to inhibit the turning operation of the link members 20 and 21 which are brought into contact therewith.

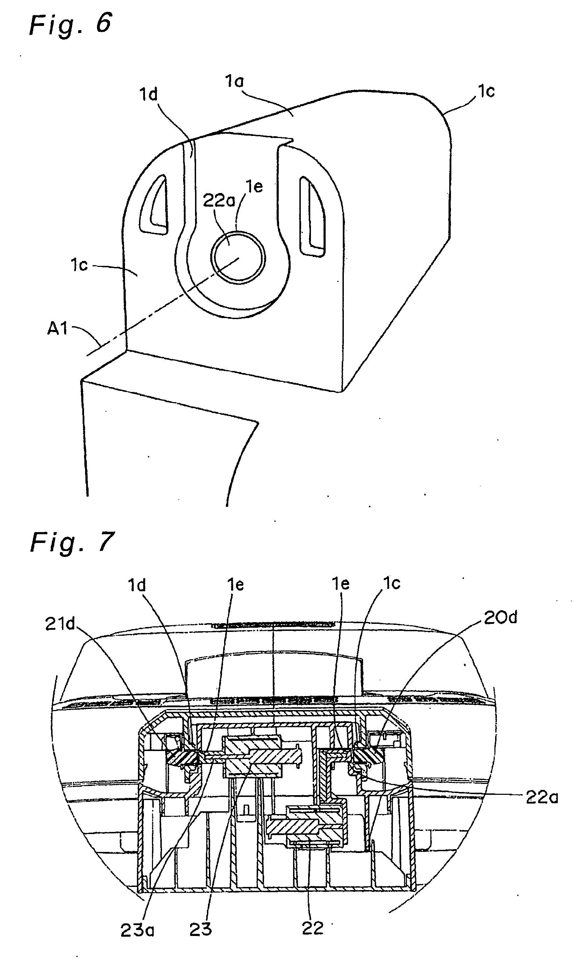

Fig. 6 is an enlarged perspective view of the hinge 1b. A holding portion 1d is provided on a side wall 1c of the hinge 1b. The holding portion 1d positions and holds the hollow shaft 16b such that the hollow shaft 16b extends along a turning axis A1 of the lid 15, that is, a center of the hollow shaft 16b is located on the turning axis A1.

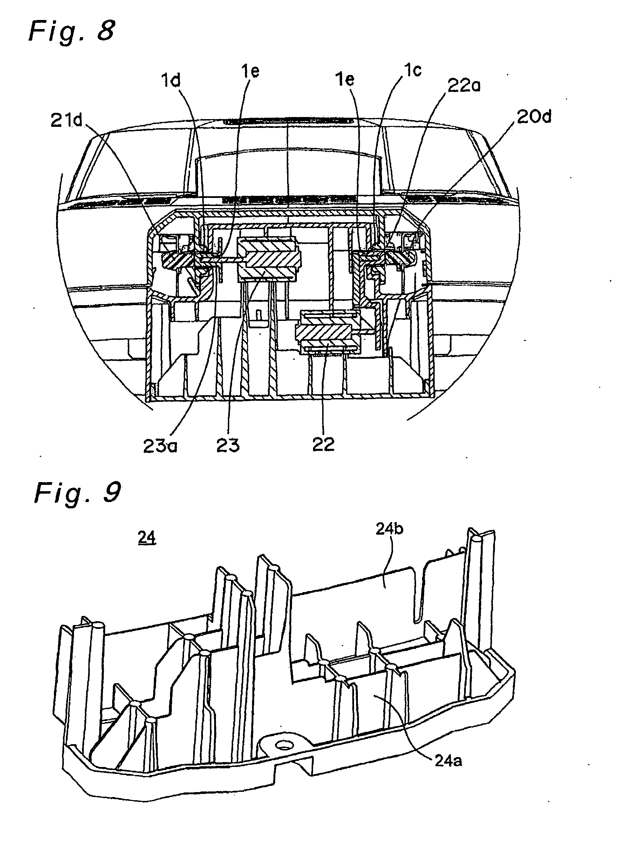

Figs. 7 and 8 are cross-sectional views of a vicinity of the hinge 1 b. Fig. 7 is a diagram in which the link members 20 and 21 are located in positions shown in Fig. 3, and Fig. 8 is a diagram in which the link members 20 and 21 are located in positions shown in Fig. 4. As shown in Figs. 7 and 8, two solenoids 22 and 23 are vertically shifted from each other in the hinge 1b so as not to make contact with each other.

The solenoid 22 includes a plunger 22a which can be moved forward and backward along the turning axis A1. The plunger 22a being moved forward and backward is guided through a through hole 1e provided in the side wall 1c of the hinge 1b and the hollow shaft 16b. The plunger 22a then brings into contact with the projection 20d through the through hole 1 e and the hollow shaft 16b. The solenoid 22 is driven to move the plunger 22a from the position shown in Fig. 7 to the position shown in Fig. 8. The projection 20d is pressed by the plunger 22a to turn the link member 20. The open/close valve 18a is turned against a resilient force of the spring. Accordingly, the submaterial in the submaterial vessel 18 is poured into the kneading vessel 7.

The solenoid 23 includes a plunger 23a which can be moved forward and backward along the turning axis A1. The plunger 23a being moved forward and backward is guided through the through hole 1e provided in the side wall 1c of the hinge 1 b and the hollow shaft 16b. The plunger 23a then brings into contact with the projection 21 d through the through hole 1 e and the hollow shaft 16b. The solenoid 23 is driven to move the plunger 23a from the position shown in Fig. 7 to the position shown in Fig. 8. The projection 21d is pressed by the plunger 23a to turn the link member 21. The open/close plate 19a is turned against a resilient force of the spring. Accordingly, the submaterial in the submaterial vessel 19 is poured into the kneading vessel 7.

An insulating cover 24 is attached to a lower portion of the hinge 1b. The insulating cover 24 supports the solenoids 22 and 23, and prevents heat in the heating chamber 1 a from being transmitted to the solenoids 22 and 23.

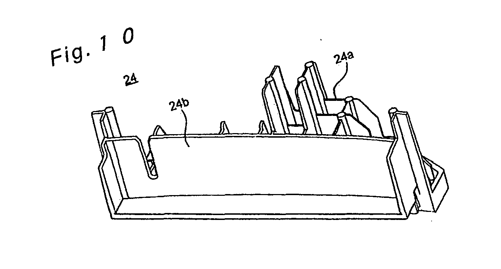

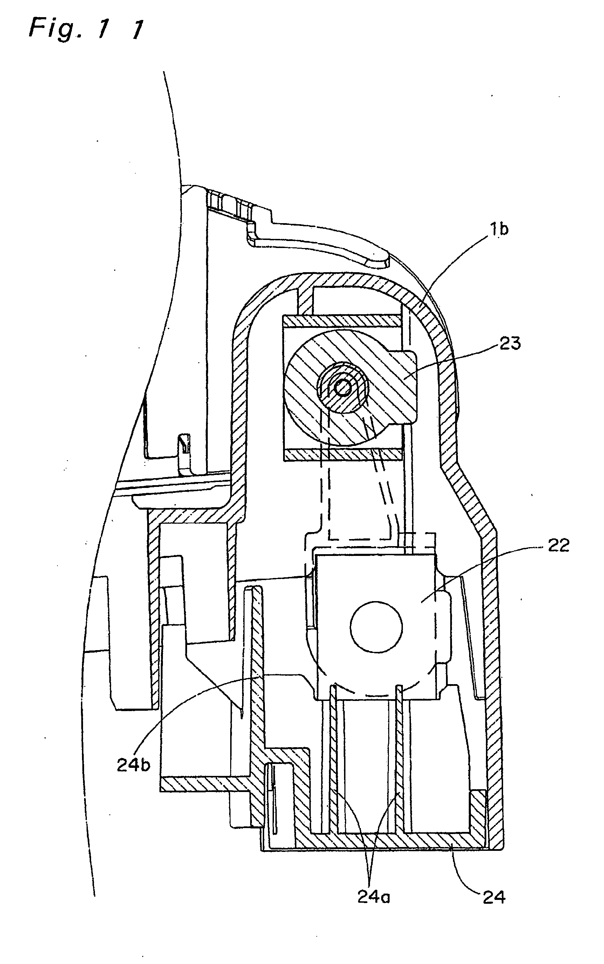

Figs. 9 and 10 are perspective views of the insulating cover 24, and Fig. 11 is an enlarged cross-sectional view of a vicinity of the insulating cover 24. The insulating cover 24 includes a lattice-shaped rib 24a that supports the solenoids 22 and 23 from below, and an insulation wall 24b that insulates the heat from the heating chamber 1 a.

A controlling portion 25 which controls the driving of each portion is provided below the operating portion 12 of the machine body 1. The controlling portion 25 stores a cooking sequence corresponding to a plurality of cooking courses. The cooking sequence refers to a program of a cooking procedure in which a current-carrying time and a heating/cooling controlling temperature of the heater 10, a rotational speed of the kneading blade 9, and a driving timing of the solenoids 22 and 23 are previously determined in respective cooking steps, such as kneading, pausing, leavening, and baking, which are performed sequentially. The controlling portion 25 controls the driving of the motor 3, the heater 10, and the solenoids 22 and 23 based on the cooking sequence corresponding to the particular cooking course selected by the selecting portion 13 and a detected temperature of the temperature sensor 11.

In the automatic bread maker according to this embodiment, the solenoids 22 and 23 are provided in the hinge 1 b. Therefore, holes are not required to be provided in a side wall of the operating portion 12. The clogging of the holes with debris of flour and nuts can thus be eliminated. In addition, a change in dimension is less in the vicinity of the turning axis A1 even when the lid 15 is repeatedly opened and closed. Therefore, the solenoid 22 can release the open/close valve 18a of the submaterial vessel 18 via the link member 20 more reliably. Further, the solenoid 23 can release the open/close plate 19a of the submaterial vessel 19 via the link member 21 more reliably. The submaterial, such as yeast, can thus be poured into the kneading vessel 7 more reliably.

The hinge 1b which is close to the heating chamber 1a is likely to be hot. However, since the automatic bread maker according to this embodiment is provided with the insulating cover 24, the solenoids 22 and 23 can be prevented from being hot. In addition, the lattice-shaped rib 24a of the insulating cover 24 supports the solenoids 22 and 23. Therefore, heat transmission through the insulating cover 24 and shifting of the solenoids 22 and 23 can be prevented.

In the automatic bread maker according to this embodiment, the solenoids 22 and 23 are not provided in the operating portion 12. A height position of the operating portion 12 can thus be lower than the conventional one (below the lid 15). Accordingly, the operating portion 12 is prevented from being an obstacle at the time of attaching and detaching the kneading vessel 7 in the heating chamber 1a.

In the automatic bread maker according to this embodiment, the plungers 22a and 23a are moved forward and backward in the hollow shafts 16b. In other words, the holes are opened at the centers of the cylindrical turning shafts to move the plungers 22a and 23a forward and backward in the holes. Accordingly, the plungers 22a and 23a can press the projections 20d and 21d of the link members 20 and 21 more reliably without being shifted. Therefore, the submaterial, such as yeast, can be poured into the kneading vessel 7 more reliably.

In the automatic bread maker according to this embodiment, the link members 20 and 21 are turned in the surface direction of the lid 15. Thus, a thickness of the lid 15 and a lateral width of the hinge 1 b can be smaller.

Contacted portions of the link member 20 and the plunger 22a preferably follow the turning operation of the link member 20. For instance, preferably, the contacted portion of the plunger 22a is spherical so that the contacted portion of the link member 20 slidably embraces a spherical surface of the contacted portion of the plunger 22a. Accordingly, the plunger 22a can turn the link member 20 more reliably. As a result, the submaterial in the submaterial vessel 18 can be poured into the kneading vessel 7 more reliably.

When both the contacted portion of the link member 20 onto the plunger 22a and the contacted portion of the plunger 22a onto the link member 20 are formed of a resin, noise is caused at the time of the contacting of the link member 20 and the plunger 22a. Therefore, for instance, preferably, one of the contacted portion of the link member 20 onto the plunger 22a and the contacted portion of the plunger 22a onto the link member 20 is formed of rubber, and the other is formed of a resin. Accordingly, the followability becomes good, and the noise can be suppressed.

Contacted portions of the link member 21 and the plunger 23a also preferably follow the turning operation of the link member 21. Accordingly, the plunger 23a can turn the link member 21 more reliably. As a result, the submaterial in the submaterial vessel 19 can be poured into the kneading vessel 7 more reliably.

The present invention is not limited to the above embodiment, and can be embodied in other various forms. For instance, in the above embodiment, since the lateral width of the hinge 1b is made smaller, the solenoids 22 and 23 are vertically shifted from each other, but the present invention is not limited thereto. For instance, the solenoids 22 and 23 may be arranged to be coaxial with the turning axis A1.

In the above embodiment, the hollow shaft 16b is provided on the lid 15, and the holding portion 1d is provided on the hinge 1b. However, the present invention is not limited thereto. For instance, the holding portion may be provided on the lid 15, and the hollow shaft may be provided on the hinge 1b. In this case, the same effect can be obtained.

In the above embodiment, two submaterial vessels are provided. However, the present invention is not limited thereto. One submaterial vessel or three or more submaterial vessels may be provided.

Although the present invention has been fully described in connection with the preferred embodiment thereof with reference to the accompanying drawings, it is to be noted that various changes and modifications are apparent to those skilled in the art. Such changes and modifications are to be understood as included within the scope of the present invention as defined by the appended claims unless they depart therefrom.

### Industrial Applicability

In the automatic bread maker according to the present invention, the holes through which the plungers of the solenoids extend can be prevented from being clogged with debris of flour and nuts. In addition, the submaterial, such as yeast, can be poured into the kneading vessel more reliably. Thus, the automatic bread maker according to the present invention is particularly useful as a bread maker which is typically used in homes.

## Claims

1. An automatic bread maker comprising:
a bottomed cylindrical machine body (1) which defines a heating chamber (1a) therein;
an operating portion (12) which is provided in a front upper portion of the machine body (1), the operating portion (12) having an electronic component;
a lid (15) which is turnably attached to a hinge (1b) in a rear upper portion of the machine body (1), the lid (15) opening and closing an upper opening of the heating chamber (1a);
a kneading vessel (7) which is accommodated in the heating chamber (1 a) and accommodates a cooking material;
a submaterial vessel (18, 19) which is attached to the lid (15) and accommodates a submaterial, the submaterial vessel (18, 19) having at least a portion of a bottom wall which is opened such that the submaterial is poured into the kneading vessel (7);
a solenoid (22, 23) having a plunger (22a, 23a) moved forward and backward; and
a link member (20, 21) which opens and closes the portion of the submaterial vessel (18, 19) according to the forward and backward moving of the plunger (22a, 23a);
**characterized in that** the solenoid (22, 23) is arranged in the hinge (1b) such that its plunger (22a, 23a) is moved forward and backward along a turning axis (A1) of the lid (15).

2. The automatic bread maker according to claim 1, wherein:
a hollow shaft (16b) is provided on one of the lid (15) and the hinge (1b), and
a holding portion (1d) is provided on the other of the lid (15) and the hinge (1b), the holding portion (1d) positioning and holding the plunger (22a, 23a) to move the plunger (22a, 23a) forward and backward in the hollow shaft (16b).

3. The automatic bread maker according to claim 1 or 2,
wherein the link member (20, 21) is turned in a surface direction of the lid (15) according to the forward and backward moving of the plunger (22a, 23a) to open and close the portion of the submaterial vessel (18, 19).

4. The automatic bread maker according to claim 3, wherein:
the link member (20, 21) and the plunger (22a, 23a) are brought into contact with each other, and
contacted portions (20d, 21 d) of the link member (20, 21) and the plunger (22a, 23a) follow a turning operation of the link member (20, 21).

5. The automatic bread maker according to claim 4,
wherein one of the contacted portion (20d, 21d) of the link member (20, 21) onto the plunger (22a, 23a) and the contacted portion (20d, 21d) of the plunger (22a, 23a) onto the link member (20, 21) is formed of rubber, and the other is formed of a resin.

6. The automatic bread maker according to claim 4 or 5, wherein:
a hollow shaft (16b) is provided on one of the lid (15) and the hinge (1b),
the contacted portion (20d, 21d) of the link member (20,21) passes through the hollow shaft (16b), and
the hollow shaft (16b) is formed in an oval shape so as not to inhibit the turning operation of the link member (20,21).

7. The automatic bread maker according to any one of claims 1 to 6, comprising an insulating cover which supports the solenoid (22, 23) and prevents heat in the heating chamber (1a) from being transmitted to the solenoid (22, 23).

## Patentansprüche

1. Automatische Brotzubereitungsvorrichtung, enthaltend:
einen zylindrischen Vorrichtungskörper (1) mit Boden, der darin eine Heizkammer (1a) definiert;
einen Bedienungsbereich (12), der in einem vorderen oberen Bereich des Vorrichtungskörpers (1) vorgesehen ist, wobei der Bedienungsbereich (12) eine elektronische Komponente aufweist;
einen Deckel (15), der in einem hinteren oberen Bereich des Vorrichtungskörpers (1) drehbar an einem Gelenk (1 b) angebracht ist, wobei der Deckel (15) eine obere Öffnung der Heizkammer (1a) öffnet und schließt;
einen Behälter (7) zum Kneten, der in der Heizkammer (1a) untergebracht ist und ein Zubereitungsmaterial aufnimmt;
einen Behälter (18, 19) für zusätzliches Material, der an dem Deckel (15) angebracht ist und ein zusätzliches Material aufnimmt, wobei der Behälter (18, 19) für zusätzliches Material zumindest einen Bereich einer Bodenwand aufweist, welcher geöffnet wird, um das zusätzliche Material in den Behälter (7) zum Kneten hinzuzufügen;
ein Solenoid (22, 23), das einen vorwärts und rückwärts bewegten Kolben (22a, 23a) aufweist; und
ein Verbindungsbauteil (20, 21), das den Bereich des Behälters (18, 19) für zusätzliches Material gemäß des Vorwärts- und Rückwärtsbewegens des Kolbens (22a, 23a) öffnet und schließt;
**dadurch gekennzeichnet, dass** das Solenoid (22, 23) in dem Gelenk (1b) angeordnet ist, sodass sein Kolben (22a, 23a) entlang einer Drehachse (A1) des Deckels (15) vorwärts und rückwärts bewegbar ist.

2. Automatische Brotzubereitungsvorrichtung nach Anspruch 1, wobei:
ein Schacht (16b) entweder an dem Deckel (15) oder dem Gelenk (1b) vorgesehen ist, und
ein Haltebereich (1d) an dem Deckel (15) oder dem Gelenk (1b) vorgesehen ist, wobei der Haltebereich (1d) den Kolben (22a, 23a) positioniert und hält, um den Kolben (22a, 23a) in dem Schacht (16b) vorwärts und rückwärts zu bewegen.

3. Automatische Brotzubereitungsvorrichtung nach Anspruch 1 oder 2, wobei das Verbindungsbauteil (20, 21) in einer Oberflächenrichtung des Deckels (15) gemäß des Vorwärts- und Rückwärtsbewegens des Kolbens (22a, 23a) gedreht wird, um den Bereich des Behälters (18, 19) für das zusätzliche Material zu öffnen und zu schließen.

4. Automatische Brotzubereitungsvorrichtung nach Anspruch 3, wobei:
das Verbindungsbauteil (20, 21) und der Kolben (22a, 23a) in Kontakt zueinander gebracht sind, und
in Kontakt stehende Bereiche (20d, 21 d) des Verbindungsbauteils (20, 21) und des Kolbens (22a, 23a) einem Drehvorgang des Verbindungsbauteils (20, 21) folgen.

5. Automatische Brotzubereitungsvorrichtung nach Anspruch 4,
wobei einer von den in Kontakt stehenden Bereichen (20d, 21d) des Verbindungsbauteils (20, 21) auf den Kolben (22a, 23a) oder auf das Verbindungsbauteil (20, 21) aus Gummi gebildet ist, und der andere aus einem Harz gebildet ist.

6. Automatische Brotzubereitungsvorrichtung nach Anspruch 4 oder 5, wobei:
ein Schacht (16b) entweder an dem Deckel (15) oder dem Gelenk (1b) vorgesehen ist,
der in Kontakt stehende Bereich (20d, 21 d) des Verbindungsbauteils (20, 21) den Schacht (16b) durchsetzt, und
der Schacht (16b) in einer ovalen Form gebildet ist, um den Drehvorgang des Verbindungsbauteils (20, 21) nicht zu verhindern.

7. Automatische Brotzubereitungsvorrichtung nach einem der Ansprüche 1 bis 6, enthaltend eine isolierende Abdeckung, die das Solenoid (22, 23) stützt und Wärme in der Heizkammer (1a) davon abhält, auf das Solenoid (22, 23) übertragen zu werden.

## Revendications

1. Dispositif automatique de préparation de pain comprenant:
un corps de dispositif (1) cylindrique à fond qui définit une chambre de chauffe (1a) dans son intérieur;
une zone de commande (12) qui est prévue dans une zone avant supérieure du corps de dispositif (1), ladite zone de commande (12) présentant un composant électronique;
un couvercle (15) qui est monté à rotation sur une articulation (1b) dans une zone arrière supérieure du corps de dispositif (1), ledit couvercle (15) ouvrant et fermant une ouverture supérieure de ladite chambre de chauffe (1a);
un récipient de pétrissage (7) qui est logé dans la chambre de chauffe (1a) et qui reçoit une matière à préparer;
un récipient (18, 19) de matière supplémentaire qui est monté sur le couvercle (15) et qui reçoit une matière supplémentaire, ledit récipient (18, 19) de matière supplémentaire présentant au moins une zone d'une paroi de fond, qui est ouverte pour ajouter la matière supplémentaire dans le récipient de pétrissage (7);
un solénoïde (22, 23) ayant un piston (22a, 23a) déplacé en avant et en arrière; et
un élément de liaison (20, 21) qui ouvre et ferme la zone du récipient (18, 19) de matière supplémentaire selon le mouvement en avant et en arrière du piston (22a, 23a);
**caractérisé par le fait que** ledit solénoïde (22, 23) est disposé dans l'articulation (1b) de sorte que son piston (22a, 23a) est déplaçable en avant et en arrière le long d'un axe de rotation (A1) du couvercle (15).

2. Dispositif automatique de préparation de pain selon la revendication 1, dans lequel:
une cuve (16b) est prévue soit sur le couvercle (15) soit sur l'articulation (1b), et
une zone de maintien (1d) est prévue sur le couvercle (15) ou sur l'articulation (1b), ladite zone de maintien (1d) positionnant et maintenant le piston (22a, 23a) afin de déplacer le piston (22a, 23a) en avant et en arrière dans la cuve (16b).

3. Dispositif automatique de préparation de pain selon la revendication 1 ou 2, dans lequel ledit élément de liaison (20, 21) est tourné dans une direction de surface du couvercle (15) selon le mouvement en avant et en arrière du piston (22a, 23a) afin d'ouvrir et de fermer la zone du récipient (18, 19) pour la matière supplémentaire.

4. Dispositif automatique de préparation de pain selon la revendication 3, dans lequel:
ledit élément de liaison (20, 21) et le piston (22a, 23a) sont mis en contact l'un avec l'autre, et
des zones en contact (20d, 21d) de l'élément de liaison (20, 21) et du piston (22a, 23a) suivent une opération de rotation de l'élément de liaison (20, 21).

5. Dispositif automatique de préparation de pain selon la revendication 4, dans lequel l'une des zones en contact (20d, 21d) de l'élément de liaison (20, 21) sur les pistons (22a, 23a) ou sur l'élément de liaison (20, 21) est formée de caoutchouc et l'autre est formée d'une résine.

6. Dispositif automatique de préparation de pain selon la revendication 4 ou 5, dans lequel:
une cuve (16b) est prévue soit sur le couvercle (15) soit sur l'articulation (1 b),
la zone en contact (20d, 21d) de l'élément de liaison (20, 21) passe à travers la cuve (16b), et
la cuve (16b) est réalisée en une forme ovale de manière à ne pas empêcher l'opération de rotation de l'élément de liaison (20, 21).

7. Dispositif automatique de préparation de pain selon l'une quelconque des revendications 1 à 6, comprenant une couverture isolante qui supporte le solénoïde (22, 23) et empêche que de la chaleur dans la chambre de chauffe (1a) ne soit transmise au solénoïde (22, 23).
